# EUROPEAN PATENT SPECIFICATION

(11) **EP 4 417 286 B1**
(45) Date of publication and mention of the grant of the patent: **28.10.2026**
(21) Application number: 24156805.4
(22) Date of filing: 09.02.2024
(51) Int. Cl.: B01D 19/00, B01F 25/421

(54) **APPARATUS AND METHOD FOR TREATING A FLUID MIXTURE**
VORRICHTUNG UND VERFAHREN ZUR BEHANDLUNG EINER FLÜSSIGKEITSMISCHUNG
APPAREIL ET PROCÉDÉ DE TRAITEMENT D'UN MÉLANGE DE FLUIDES

(30) Priority: 15.02.2023 US 202363445967 P
(43) Date of publication of application: 21.08.2024
(73) Proprietor: Thera-Clean Inc., Coquitlam, BC V3B 7W4 (CA)
(72) Inventor: Darling, Kyle, Coquitlam, British Columbia V3B 7W4 (CA); Formanek, Martin, Coquitlam, British Columbia V3B 7W4 (CA)
(74) Representative: Papula Oy

(56) References cited:
- EP-A1- 3 744 412
- GB-A- 332 678
- US-A- 6 096 120
- US-A1- 2009 087 683
- US-A1- 2011 241 230
- US-B2- 8 894 755
- US-B2- 9 909 405

## Description

### Cross-reference To Related Applications

This application claims the benefit and priority of U.S. Patent Application No. 63/445967, filed 15 February 2023, entitled APPARATUS AND METHODS FOR TREATING A FLUID MIXTURE

### Field

This invention relates to apparatus for producing a fluid mixture that is useful for generating microbubbles and methods of producing a fluid mixture useful for generating microbubbles.

### Background

Microbubbles are bubbles with a diameter between about 1x10⁻⁵ meters to about 1x10⁻⁶ meters. Microbubbles have wide applications in industry, life science, medicine, veterinary care, etc. For example, microbubble solutions (typically comprising microbubbles of air in water) may be used for washing animals, animal grooming, animal skin cleansing, and other veterinary applications. One example is the Thera-Clean^{®} Microbubble Bathing System. Advantages of using microbubbles in animal cleaning (as compared to other cleaning methods and cleaning solutions) include odor reduction, itch reduction, and reduced skin irritation.

There are generally two steps to creating microbubbles. The first step involves producing a fluid such that the produced fluid is suitable for generating microbubbles. Typically the first step is performed by a mixing tank that mixes a source of liquid and gas. The second step involves pumping the produced fluid through a microbubble generating nozzle to generate the microbubbles.

To generate high concentrations of microbubbles it is desirable to reduce the presence of large air bubbles with a diameter greater than 1x10⁻⁵ meters in the fluid mixture before pumping the fluid through the microbubble generating nozzle. Lower levels of large air bubbles in the produced fluid can lead to higher concentrations of microbubbles as well as longer lasting microbubbles when such microbubbles are generated by the microbubble generating nozzle. Typically, a fluid source supplies a fluid comprising both liquid and gas to the mixing tank; the gas may naturally form bubbles in the liquid. Therefore, one problem in producing a fluid to be more suitable for generating higher concentration of and longer lasting microbubbles is to separate as many large air bubbles from the fluid as possible. One solution is to create turbulence in the fluid flow because turbulence can cause large air bubbles to form and subsequently be separated from the fluid. Prior art apparatus and systems have utilized a baffle plate in an enclosed housing to create turbulence in the fluid flow in an effort to separate the large air bubbles. Examples of an apparatus can be seen in EP 3744412 A1, GB 332678 A, or US 2009087683 A1.

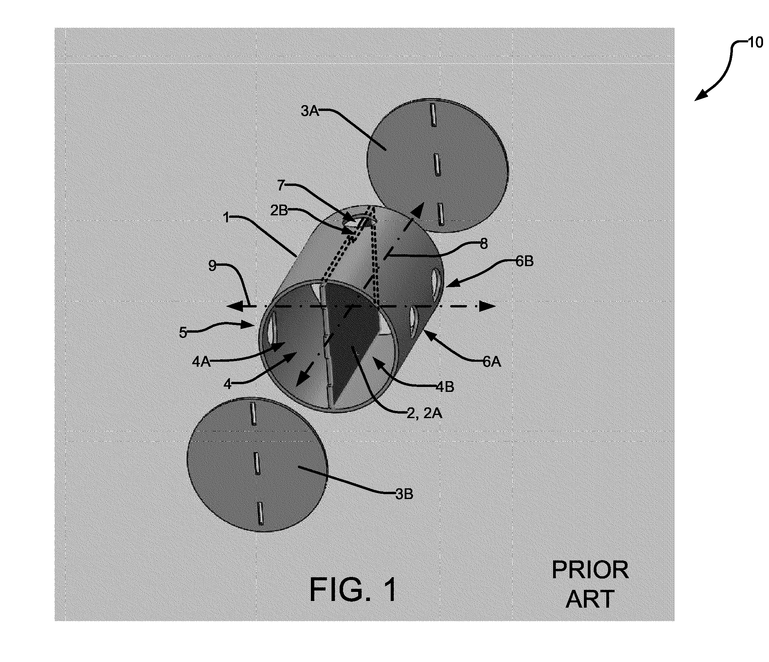

FIG. 1 is a perspective view of a conventional tank 10 designed to produce a fluid source for microbubble generating by creating turbulence in the fluid flow in an effort to separate large air bubbles from the fluid. Tank 10 comprises a housing 1 and a baffle plate 2. Housing 1 may be joined with panels 3A and 3B to enclose an interior 4 in which baffle plate 2 is located.

Housing 1 is shaped to define a fluid inlet 5 for directing a flow of fluid from a fluid source (not shown in FIG. 1) into interior 4 of housing 1. Housing 1 is also shaped to define fluid outlets 6A and 6B for directing the flow of fluid out of interior 4 of housing 1. Fluid that exits housing 1 may be directed to an inlet of a microbubble generating nozzle (not shown in FIG. 1).

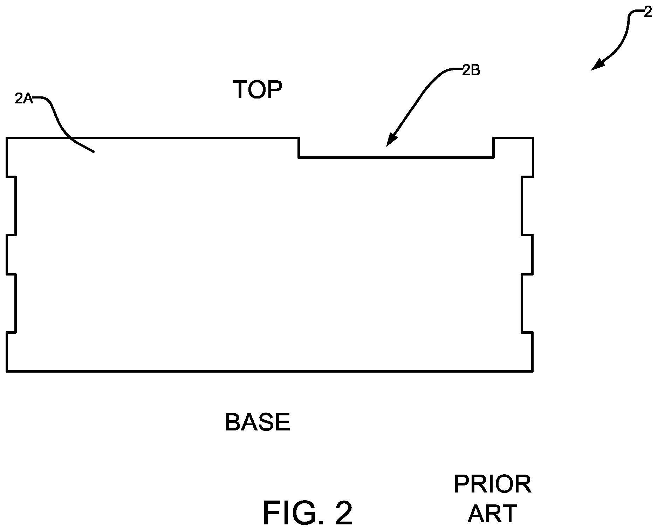

Baffle plate 2 is shaped and/or located to disrupt the flow of the fluid from the fluid source (i.e. fluid entering tank 10 via fluid inlet 5). FIG. 2 is a plan view of baffle plate 2 of prior art tank 10. Baffle plate 2 comprises a planar body 2A for disrupting the flow of the fluid from the fluid source to create turbulence. Baffle plate 2 is also shaped to define (together with housing 1) an aperture 2B.

Returning to FIG. 1, when baffle plate 2 is placed in conventional tank 10, baffle plate 2 is positioned such that planar body 2A of baffle plate 2 partitions interior 4 of housing 1 into a first chamber 4A and a second chamber 4B with at least approximately equal volume. Baffle plate 2 is also positioned such that aperture 2B is located at a top of interior 4 of housing 1. A pressure gradient is created in tank 10 (e.g. by the introduction of fluid into fluid inlet 5) such that fluid disrupted by baffle plate 2 is directed towards fluid outlets 6A and 6B through aperture 2B. Fluid from outlets 6A, 6B is directed to one or more microbubble-generating nozzles.

Housing 1 is also shaped to define a top fluid outlet 7 at a location atop aperture 2B when baffle plate 2 is installed within housing 1. Top fluid outlet 7 is configured to direct fluid out of interior 4 of housing 1. In operation, as the flow of the fluid is disrupted by baffle plate 2 in chamber 4A, large air bubbles are separated from the fluid due to the turbulence. Since air in such large bubbles is less dense than the liquid (e.g. water) introduced into interior 4, the large air bubbles rise to the top of interior 4. As the fluid is directed into chamber 4B through aperture 2B, large air bubbles may be directed out of interior 4 through top fluid outlet 7. Top fluid outlet 7 may be attached to an air vent valve (not shown). Fluid that exits tank 10 from top fluid outlet 7 is not directed to the microbubble-generating nozzle(s) because it typically includes undesirably large amounts of large air bubbles.

Housing 1 is cylindrically shaped about a central axis 8 and, in use axis 8 may be generally horizontally oriented, to facilitate directing large air bubbles towards top fluid outlet 7.

Conventional tank 10 may be applied to produce a fluid source consisting of a mixture of water and air to make the water more suitable for generating microbubbles.

For example, in operation, water is pumped into chamber 4A of interior 4 of housing 1 through fluid inlet 5 along with air. As the water and air mixture runs into baffle plate 2, turbulence is created within chamber 4A causing large air bubbles to form and be separated from the water. The cylindrical shape of housing 1 and the horizontal orientation of housing axis 8 allows large air bubbles to rise towards top fluid outlet 7. When the water accumulated in chamber 4A reaches a level at or above aperture 2B the water which may include smaller air bubbles (having diameters less than 1x10⁻⁵ meters) flows into chamber 4B and then out of interior 4 through fluid outlets 6A and 6B.

One shortcoming of conventional tank 10 is that the flow of water and the flow of large air bubbles travel the same fluid flow path, namely through aperture 2B, from chamber 4A into chamber 4B. Due to the overlapping fluid flow path, the flow of water tends to sweep some of the large air bubbles along with the flow of water into chamber 4B. As a result, some large air bubbles are not directed out of housing 1 through fluid outlet 7, but instead pass through aperture 2B along with the water into chamber 4B and may be subsequently directed to outlets 6A and 6B.

Another shortcoming of conventional tank 10 is that conventional tank 10 does not define an ascending fluid flow path along a top surface of conventional tank 10 from fluid inlet 5 to fluid outlets 6A and 6B. In particular conventional tank 10 defines a downward arcuate fluid flow path in chamber 4B after the flow of the fluid passes through aperture 2B. As large air bubbles form from the turbulence, the large air bubbles tend to rise because large air bubbles have a density less than the density of smaller air bubbles and the density of the liquid (e.g. water). However, when some of the large air bubbles pass into chamber 4B as previously described, there does not exist a fluid flow path for these large air bubbles to travel back towards top fluid outlet 7 against the aggregate flow of the fluid. Instead the large air bubbles are swept downward by the flow of the fluid towards fluid outlets 6A and 6B. As a result, once the large air bubbles pass through aperture 2B there exists no mechanism in conventional tank 10 for these large air bubbles to be separated from the flow of the fluid or to exit tank 10 via top fluid outlet 7.

The presence of large air bubbles in the produced fluid (output from fluid outlets 6A, 6B and provided to microbubble-generating nozzle(s)) reduce the final concentration of microbubbles after the fluid is pumped through the microbubble generating nozzle and also cause the generated microbubbles to be shorter-lived.

Accordingly, there is a desire for apparatus and methods for producing a fluid mixture to have lower presence of large air bubbles and thus be more conducive to generating microbubbles. Examples of apparatuses for producing a fluid mixture can be seen in EP 3744412 A1, GB 332678 A, or US 2009087683 A1.

### Summary

One aspect of the invention provides an apparatus for mixing a fluid mixture suitable for creating microbubbles. The apparatus comprises: an elongated housing extending in a longitudinal direction from a fluid inlet end to a fluid outlet end, the housing comprising a lower surface that extends generally in the longitudinal direction and an upper surface that extends at an ascending angle relative to the longitudinal direction, wherein the elongated housing tapers from the fluid outlet end towards the fluid inlet end along the longitudinal direction such that a cross-sectional area of an interior of the housing decreases along the longitudinal direction between the fluid outlet end and the fluid inlet end; and, one or more baffle plates located within the interior of the housing, each of the one or more baffle plates shaped to disrupt a flow of fluid from the fluid inlet end to the fluid outlet end to create turbulence in the flow of fluid wherein the turbulence causes large air bubbles to form and separate from the flow of fluid by rising upwardly to follow an upper fluid path along the upper surface of the housing from the fluid inlet end to the fluid outlet end, wherein an interior surface of the housing and each of the one or more baffle plates are shaped to define a lower aperture located at a bottom of the interior of the housing and at a cross-sectional location corresponding to the baffle plate, wherein the interior surface of the housing and each of the one or more baffle plates are shaped to define an upper aperture located at a top of the interior of the housing and at a cross-sectional location corresponding to the baffle plate, wherein the one or more baffle plates comprise a plurality of baffle plates, wherein at least two of the plurality of baffle plates form at least three corresponding chambers and are shaped to define their respective lower apertures at opposing transverse sides of the housing, wherein the housing is shaped to define an upper fluid outlet at the fluid outlet end for directing the large air bubbles out of the housing, wherein the upper fluid path extends along the upper surface of the housing and through the upper apertures from the fluid inlet end to the upper fluid outlet at the fluid outlet end, wherein the housing is shaped to define a fluid inlet at the fluid inlet end and a lower fluid outlet at the fluid outlet end for facilitating a lower flow of fluid out of the housing.

Each of the lower apertures located at the bottom of the interior may be defined by the respective baffle plate, the lower surface and a side surface of the housing to facilitate the lower flow of fluid along a lower flow path along the bottom of the interior of the housing and through the lower aperture(s) from the fluid inlet end to the fluid outlet end.

The longitudinal direction may be horizontal.

The fluid inlet may be defined in the upper surface of the housing.

The first fluid outlet may be located higher than the second fluid inlet is located.

The second fluid outlet may be fluidly connected to one or more microbubble generating nozzles.

The first fluid outlet may be fluidly connected to an air vent for exhausting air from the housing.

The housing may be shaped to define a third fluid outlet proximate to the top of the interior of the housing and at a location between the fluid inlet and the second fluid outlet configured to direct fluid out of the housing.

Another aspect of the invention provides a method for separating large air bubbles from a flow of fluid. The method comprises: directing the flow of fluid into the claimed apparatus; disrupting the flow of fluid inside a housing of the apparatus with one or more baffle plates to create turbulence in the flow of fluid wherein the turbulence causes large air bubbles to form and separate from the flow of fluid; directing large air bubbles formed from the turbulence to an upper fluid path along an upper surface of the apparatus and to an exterior of the apparatus; and directing a remaining flow of fluid through a lower fluid path, the lower fluid path lower than the upper fluid path and defined by a plurality of apertures within the housing, wherein at least two of the plurality of apertures are located on opposing transverse sides of the housing.

Other aspects of the invention provide apparatus having any new and inventive feature, combination of features, or sub-combination of features as described herein.

Other aspects of the invention provide methods having any new and inventive steps, acts, combination of steps and/or acts or sub-combination of steps and/or acts as described herein.

It is emphasized that the invention relates to all combinations of the above features, even if these are recited in different claims.

Further aspects and example embodiments are illustrated in the accompanying drawings and/or described in the following description.

### Brief Description of the Drawings

The accompanying drawings illustrate non-limiting example embodiments of the invention.
FIG. 1 is a perspective view of a conventional mixing tank.
FIG. 2 is a plan view of a conventional baffle plate.
FIG. 3 is a perspective view of a mixing tank according to an example embodiment.
FIG. 4 is a schematic cross-sectional view of the mixing tank of FIG. 3 along lines 4-4.
FIG. 5 is a perspective view of the FIG. 3 mixing tank 3 applied to produce a flow of fluid from a fluid source.
FIG. 6 is a schematic cross-sectional view of the FIG. 5 mixing tank 5 along lines 6-6.
FIGs. 7A and 7B are plan views of baffle plates according to a solution.

### Detailed Description

Throughout the following description, specific details are set forth in order to provide a more thorough understanding of the invention. However, the invention may be practiced without these particulars. In other instances, well known elements have not been shown or described in detail to avoid unnecessarily obscuring the invention. Accordingly, the specification and drawings are to be regarded in an illustrative, rather than a restrictive sense.

An apparatus for producing a fluid mixture to be suitable for creating microbubbles is disclosed herein. The apparatus comprises a mixing tank extending in a longitudinal direction from a fluid inlet end to a fluid outlet end. The apparatus comprises one or more baffle plates configured to disrupt a flow of the fluid in the tank from the fluid inlet end to the fluid outlet end. The mixing tank is tapered from a the fluid outlet end to the fluid inlet end such that a cross-sectional area of an interior of the mixing tank increases along the longitudinal direction from the fluid inlet end to the fluid outlet end.

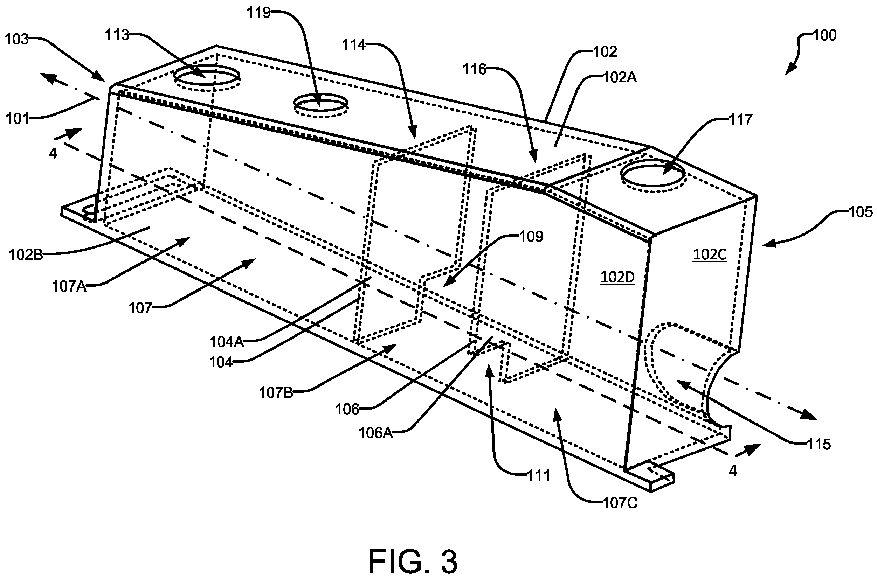

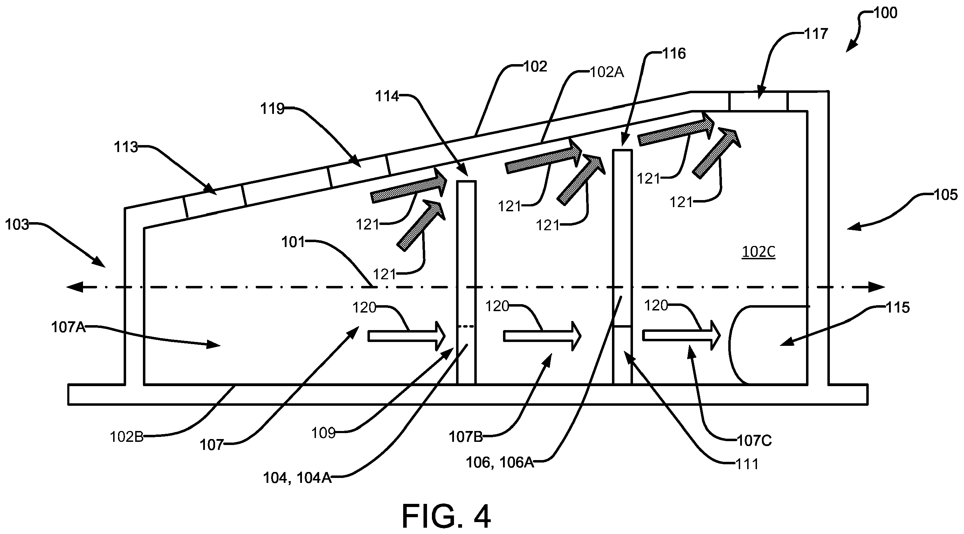

FIG. 3 illustrates a mixing tank 100 according to an example embodiment. FIG. 4 is a schematic cross sectional view of mixing tank 100 along lines 4-4. Features not directly visible in FIG. 3 are shown in hidden (dashed) lines.

Mixing tank 100 comprises a housing 102 extending in longitudinal direction 101 from a fluid inlet end 103 to a fluid outlet end 105. In use, longitudinal direction 101 may be generally (e.g. +/-5° or +/-10°) from horizontal. Housing 102 is tapered from fluid outlet end 105 to fluid inlet end 103 along longitudinal direction 101 such that a cross-sectional area of an interior 107 of housing 102 increases along longitudinal direction 101 from fluid inlet end 103 to fluid outlet end 105. In some embodiments housing 102 comprises an upper surface 102A and a bottom surface 102B wherein bottom surface 102B extends parallel to longitudinal direction 101 and upper surface 102A extends in an ascending manner (relative to longitudinal direction 101) from fluid inlet end 103 to fluid outlet end 105 along longitudinal direction 101.

Mixing tank 100 comprises baffle plates 104 and 106 which are located in interior 107 of housing 102. Baffle plates 104, 106 are shaped to disrupt a flow of fluid from fluid inlet end 103 to fluid outlet 105.

Baffle plate 104 of the illustrated embodiment comprises a planar body 104A extending in cross-sectional directions that are generally orthogonal to longitudinal direction 101 to disrupt the flow of the fluid along longitudinal direction 101. Baffle plate 104 (together with bottom surface 102B and one of side surfaces 102C of housing 102) are shaped to define an aperture 109. When a pressure gradient is created in housing 102 between fluid inlet end 103 and fluid outlet end 105 (e.g. by the introduction of fluid via inlet 113), fluid flows from the fluid inlet (upstream) side of baffle plate 104 to the fluid outlet (downstream) side of baffle plate 104 through aperture 109. Similarly, baffle plate 106 comprises a planar body 106A extending in cross-sectional directions that are generally orthogonal to longitudinal direction 101 to disrupt the flow of the fluid along longitudinal direction 101. Baffle plate 106 (together with bottom surface 102B and one of side surfaces 102D of housing 102) are shaped to define an aperture 111. When a pressure gradient is created in housing 102 between fluid inlet end 103 and fluid outlet end 105 (e.g. by the introduction of fluid via inlet 113), fluid flows from the fluid inlet (upstream) side of baffle plate 106 to the fluid outlet (downstream) side of baffle plate 106 through aperture 111. Apertures 109 and 111 together define a lower fluid path 120 (illustrated as light arrows in FIG. 4) along bottom surface 102B of housing 102 from fluid inlet end 103 to fluid outlet end 105. In some embodiments apertures 109 and 111 are defined on opposite transverse sides of housing 102. For example, referring to FIG. 3, aperture 109 is defined in part by side surface 102C of housing 102 and aperture 111 is defined in part by side surface 102D of housing 102 where side surface 102C is opposite to side surface 102D. The location of apertures 109 and 11 on opposite transverse sides of housing 102 may further disrupt a flow of the fluid along lower fluid path 120.

Baffle plates 104 and 106 partition interior 107 of housing 102 into three chambers 107A-C. Baffle plate 104 is located between first chamber 107A and second chamber 107B. Baffle plate 106 is located between second chamber 107B and third chamber 107C.

As shown in FIG. 3 and FIG. 4, baffle plates 104 and 106 together with upper surface 102A respectively define upper apertures 114 and 116 at locations near an upper region of interior 107 beneath upper surface 102A of housing 102 and at cross-sectional locations respectively corresponding to baffle plates 104 and 106. Upper aperture 114 facilitates flow of fluid between first chamber 107A and second chamber 107B. Upper aperture 116 facilitates flow of fluid between second chamber 107B and third chamber 107C. Upper apertures 114 and 116 together define an upper fluid path 121 (illustrated as dark arrows in FIG. 4) along upper surface 102A of housing 102 from fluid inlet end 103 to fluid outlet end 105. Where longitudinal axis 101 is horizontally oriented, which is currently preferred for use of tank 100, upper fluid path 121 is ascending (rises) as fluid travels from fluid inlet end 103 to fluid outlet end 105, because upper surface 102A of housing 102 is oriented at an ascending angle relative to longitudinal axis 101.

Housing 102 is shaped to define a fluid inlet 113 at fluid inlet end 103 for directing a flow of fluid from a fluid source (not shown in FIGs. 3 and 4) into first chamber 107A of housing 102, a fluid outlet 115 at fluid outlet end 105 for directing the flow of fluid out of third chamber 107C of housing 102 to one or more microbubble generating nozzle(s) (not shown in FIGs 3 or 4), and a upper fluid outlet 117 proximate to fluid outlet end 105 for directing fluid out of housing 102.

In some embodiments housing 102 is shaped to define an optional fluid outlet 119 for directing fluid out of housing 102. Fluid outlet 119 may be used to collect fluid samples from housing 102 to facilitate measurement of one or more characteristics of the fluid. For example, air pressure may be measured through a fluid flow coming through fluid outlet 119. Other fluid characteristics may additionally or alternatively be measured.

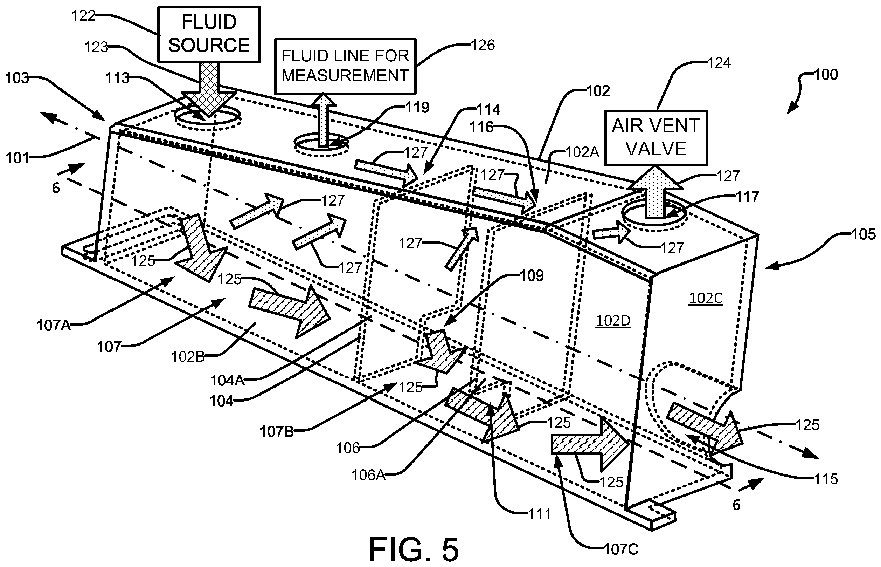

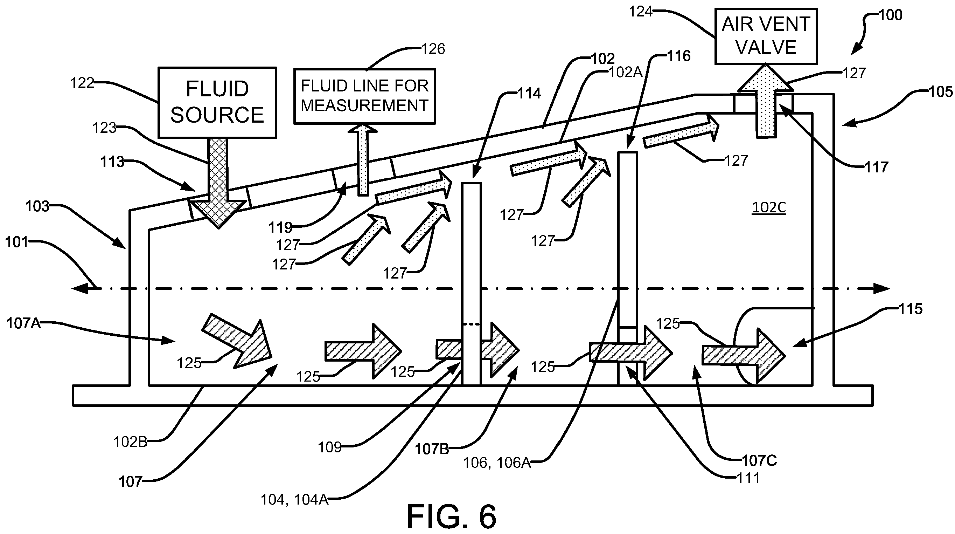

Mixing tank 100 may be applied to produce a source of water and air generating water-based microbubbles. The source of water and air produced by mixing tank 100 may be superior for microbubble generation (by suitably configured microbubble-generating nozzle(s)) than prior art techniques. FIGs. 5 and 6 schematically illustrate the production of a fluid source comprising water and air by mixing tank 100. FIG. 6 is a cross-sectional view of FIG. 5 along lines 6-6. Features not directly visible in FIG. 5 are drawn in dashed lines.

A flow of fluid 123 (illustrated as cross-hatched arrow in FIGs. 5 and 6) is supplied by a fluid source 122 to mixing tank 100 via fluid inlet 113. Fluid source 122 may comprise any suitable sources. In some embodiments fluid source 122 comprises a static fluid source, for example a storage tank, which may have its own inherent pressure head. In other embodiments fluid source 122 comprises a pressurized source, for example a pump supplying pressurized fluid through a suitable conduit.

Flow of fluid 123 may comprise any suitable composition or combination of fluids. In some embodiments flow of fluid 123 comprises a mixture of water and ambient air.

As flow of fluid 123 enters first chamber 107A of interior 107 of housing 102 flow of fluid 123 is first disrupted by bottom surface 102B of housing 102 and then subsequently disrupted by baffle plate 104. The disruption of flow of fluid 123 creates turbulence in flow of fluid 123 inside first chamber 107A. Due to the turbulence at least some large air bubbles 127 (shown schematically with dotted arrows) are formed from flow of fluid 123. Then, large air bubbles 127 tend to rise upwardly in flow of fluid 123 towards upper surface 102A of housing 102 because large air bubbles 127 are less dense than smaller air bubbles and liquid water.

Because of their relatively low density, large air bubbles 127 tend to rise within the flow of fluid in tank 100. Upper (ascending) fluid path 121 (shown in FIG. 4) through apertures 114 and 116 from fluid inlet end 103 to fluid outlet end 105 facilitate a flow of large air bubbles 127 along upper surface 102A of tank 100 from fluid inlet end 103 to upper fluid outlet 117 at fluid outlet end. Large air bubbles 127 present in first chamber 107A tend to be directed into second chamber 107B through upper aperture 114. Similarly, large air bubbles 127 present in second chamber 107B tend to be directed into third chamber 107C through upper aperture 116. Large air bubbles 127 present in third chamber 107C tend to exit from interior 107 via upper fluid outlet 117.

In contrast to large air bubbles, the liquid (e.g. water and some smaller air bubbles) 125 (shown schematically with arrows) in which the air bubbles are formed is relatively more dense and tends to move toward the bottom of interior 107 of tank 100. Thus, the liquid 125 tends to flow from first chamber 107A to second chamber 107B through aperture 109 through baffle plate 104 along lower fluid path 120 (shown in FIG. 4). Similarly, liquid 125 tends to flow from second chamber 107B to third chamber 107C through aperture 111 through baffle plate 106 along lower fluid path 120. The flow of liquid (e.g. water and some smaller air bubbles) 125 is less turbulent (i.e. more calm) in second chamber 107B than in first chamber 107A. Some large air bubbles 127 still present in flow of liquid 125 in second chamber 107B separate from flow of liquid 125 in second chamber 107B and rise towards upper surface 102A of housing 102.

Large air bubbles 127 formed or otherwise present in second chamber 107B also converge towards upper (ascending) fluid path 121 (shown in FIG. 4). Large air bubbles 127 in second chamber 107B tend to flow from second chamber 107B into third chamber 107C along fluid path 121 through upper aperture 116 by virtue of large air bubbles 127's tendency to rise (relative to liquid 125 and/or relative to smaller air bubbles). Large air bubbles 127 are then directed out of third chamber 107C of housing 102 through upper fluid outlet 117. In some embodiments upper fluid outlet 117 is coupled to an air vent valve 124 for directing combined flow of large air bubbles 127 out of housing 102.

Because liquid 125 (e.g. water and some smaller air bubbles) is relatively dense compared to large air bubbles 127, liquid 125 from second chamber 107B tends to flow into third chamber 107C through aperture 111 through baffle plate 106 along lower fluid path 120. The flow of liquid 125 may be even less turbulent (i.e. more calm) in third chamber 107C than in second chamber 107B. Relatively few large air bubbles 127 remain in the flow of liquid 125 in third chamber 107C. The flow of liquid 125 is then directed out of housing 102 through fluid outlet 115. In some embodiments, fluid outlet 115 is coupled with hose lines for directing flow of water 125 to one or more microbubble generating nozzle(s) (not shown in FIGs. 5 and 6).

In some solutions an optional fluid line for measurement 126 is coupled to fluid outlet 119 for collecting sample of fluids from interior 107 of housing 102 to perform measurements on one or more characteristics of the sample of fluids. For example, fluid line for measurement 126 comprises an air line for measuring pressure of the air in interior 107 of chamber 102. The air may include a combination of ambient air and large air bubbles 127.

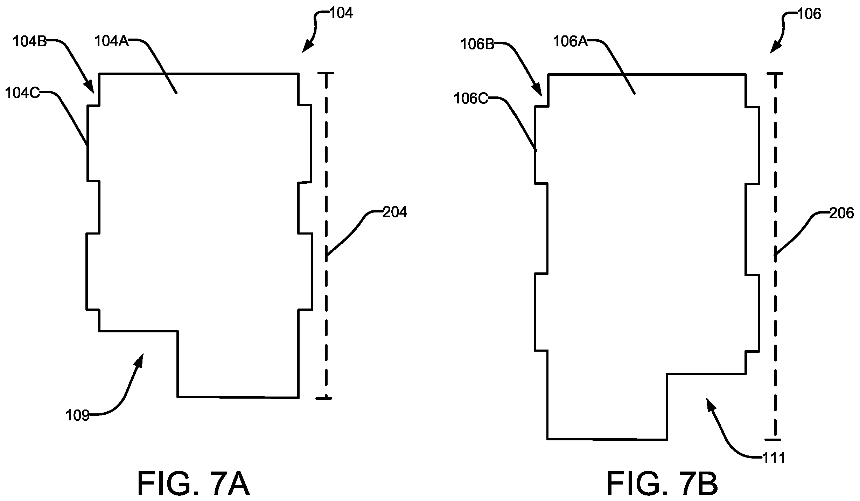

FIGs. 7A and 7B are respectively plan views of baffle plates 104 and 106 according to an example embodiment.

Baffle plates 104 and 106 of the illustrated embodiment respectively comprise planar bodies 104A and 106A. Both planar bodies 104A and 106A may each comprise a coupling mechanism or coupling features to facilitate to the walls of housing 102. In some solutions baffle plates 104 and 106 are shaped to define recesses 104B, 106B and projections104C, 106C to facilitate coupling to side walls of housing 102. Other mechanisms or features for coupling to walls of housing 102 are possible.

In some solutions baffle plate 106 has a vertical extension of length 206 and baffle plate 104 has a vertical extension of length 204 where length 206 is longer than length 204. As discussed above, baffle plates 104, 106 are respectively shaped to define corresponding portions of apertures 109, 111. In some solutions apertures 109, 111 have the same dimensions. In other solutions apertures 109, 111 have different dimensions.

Apparatus disclosed herein remove more large air bubbles from the fluid source and therefore produce a fluid suitable for creating higher concentration of and longer lasting microbubbles compared to prior art apparatus. For example, mixing tank 100 remove more larger air bubbles than prior art apparatus by a combined effect of three mechanisms.

The first mechanism is to separate the flow of large air bubbles from the flow of water into two spatially spaced apart paths (effected by the shape of tank 100 and baffles 104, 106 and by the different densities of large air bubbles and water) as opposed to the nearly overlapping path in the prior art apparatus. For example, mixing tank 100 directs a flow of water 125 to preferentially travel through tank 100 on lower surface 102B of housing 102 through a path defined by apertures 109 and 111. On the other hand, mixing tank 100 directs a flow of large air bubbles 127 near upper surface 102A of housing 102 through upper (and possibly ascending) fluid path 121 as shown in FIG. 4. As a result of these two spatially separated flow paths, the flow of water 125 is better separated from the flow of large air bubbles 127 and the possibility of large air bubbles 127 re-merging with flow of water 125 is significantly reduced.

The second mechanism is to provide more opportunities for large air bubbles 127 to form and separate from flow of water 125. Apparatus disclosed herein achieve the second mechanism by increasing a distance of the flow before reaching fluid outlets 115 and 117 and by utilizing a larger number of baffle plates to disrupt flow of water 125 and to thereby provide more opportunity for large air bubbles 127 to separate from water 125 in more chambers of housing 102. As a result large air bubbles 127 not separated from flow of water 125 in first chamber 107A can still be formed and separated from flow of water 125 in second chamber 107B and even in third chamber 107C if necessary.

The third mechanism relates to the ascending nature of fluid path 121 defined by upper surface 102A of housing 102 and apertures 114, 116. Since large air bubbles 127 have a density less than that of smaller air bubbles and that of liquid fluid, large air bubbles 127 tend to rise towards upper surface 102A of housing 102 within the flow of fluid through tank 100. The ascending fluid path 121 extends in the longitudinal direction creates a rising path from fluid inlet end 103 to fluid outlet end 105 of tank for large air bubbles to reach upper fluid outlet 117 at fluid outlet end 105. In apparatus disclosed herein ascending fluid path 121 provides large air bubbles 127 sufficient room and a corresponding fluid flow path to continue rising until arriving at upper fluid outlet 117. Therefore, little to no large air bubbles 127 in the apparatus disclosed herein would fall back down and re-merge with flow of water 125.

The combined effect of the three mechanisms ensure that many large air bubbles are separated from the flow of fluid and relatively few (e.g. little to no) large air bubbles would re-merge with the flow of fluid after being separated. Accordingly, apparatus disclosed herein are able to produce a final fluid mixture capable of creating higher concentration of and longer lasting microbubbles compared to prior art apparatus.

### Interpretation of Terms

Where a component (e.g. a software module, processor, assembly, device, circuit, etc.) is referred to herein, unless otherwise indicated, reference to that component (including a reference to a "means") should be interpreted as including as equivalents of that component any component which performs the function of the described component (i.e., that is functionally equivalent), including components which are not structurally equivalent to the disclosed structure which performs the function in the illustrated exemplary embodiments of the invention.

Unless the context clearly requires otherwise, throughout the description and the claims:
- "comprise", "comprising", and the like are to be construed in an inclusive sense, as opposed to an exclusive or exhaustive sense; that is to say, in the sense of "including, but not limited to";
- "connected", "coupled", or any variant thereof, means any connection or coupling, either direct or indirect, between two or more elements; the coupling or connection between the elements can be physical, logical, or a combination thereof;
- "herein", "above", "below", and words of similar import, when used to describe this specification, shall refer to this specification as a whole, and not to any particular portions of this specification;
- "or", in reference to a list of two or more items, covers all of the following interpretations of the word: any of the items in the list, all of the items in the list, and any combination of the items in the list;
- the singular forms "a", "an", and "the" also include the meaning of any appropriate plural forms. These terms ("a", "an", and "the") mean one or more unless stated otherwise;
- "and/or" is used to indicate one or both stated cases may occur, for example A and/or B includes both (A and B) and (A or B);
- "approximately" when applied to a numerical value means the numerical value ± 10%;
- where a feature is described as being "optional" or "optionally" present or described as being present "in some embodiments" it is intended that the present disclosure encompasses embodiments where that feature is present and other embodiments where that feature is not necessarily present and other embodiments where that feature is excluded. Further, where any combination of features is described in this application this statement is intended to serve as antecedent basis for the use of exclusive terminology such as "solely," "only" and the like in relation to the combination of features as well as the use of "negative" limitation(s)" to exclude the presence of other features; and
- "first" and "second" are used for descriptive purposes and cannot be understood as indicating or implying relative importance or indicating the number of indicated technical features.

Where a range for a value is stated, the stated range includes all sub-ranges of the range. It is intended that the statement of a range supports the value being at an endpoint of the range as well as at any intervening value to the tenth of the unit of the lower limit of the range, as well as any subrange or sets of sub ranges of the range unless the context clearly dictates otherwise or any portion(s) of the stated range is specifically excluded. Where the stated range includes one or both endpoints of the range, ranges excluding either or both of those included endpoints are also included in the invention.

Certain numerical values described herein are preceded by "about". In this context, "about" provides literal support for the exact numerical value that it precedes, the exact numerical value ±5%, as well as all other numerical values that are near to or approximately equal to that numerical value. Unless otherwise indicated a particular numerical value is included in "about" a specifically recited numerical value where the particular numerical value provides the substantial equivalent of the specifically recited numerical value in the context in which the specifically recited numerical value is presented. For example, a statement that something has the numerical value of "about 10" is to be interpreted as: the set of statements:
- in some embodiments the numerical value is 10;
- in some embodiments the numerical value is in the range of 9.5 to 10.5;
and if from the context the person of ordinary skill in the art would understand that values within a certain range are substantially equivalent to 10 because the values with the range would be understood to provide substantially the same result as the value 10 then "about 10" also includes:
- in some embodiments the numerical value is in the range of C to D where C and D are respectively lower and upper endpoints of the range that encompasses all of those values that provide a substantial equivalent to the value 10

Specific examples of systems, methods and apparatus have been described herein for purposes of illustration. These are only examples. The technology provided herein can be applied to systems other than the example systems described above. Many alterations, modifications, additions, omissions, and permutations are possible within the practice of this invention.

Any aspects described above in reference to apparatus may also apply to methods and vice versa.

Any recited method can be carried out in the order of events recited or in any other order which is logically possible. For example, while processes or blocks are presented in a given order, alternative examples may perform routines having steps, or employ systems having blocks, in a different order, and some processes or blocks may be deleted, moved, added, subdivided, combined, and/or modified to provide alternative or subcombinations. Each of these processes or blocks may be implemented in a variety of different ways. Also, while processes or blocks are at times shown as being performed in series, these processes or blocks may instead be performed in parallel, simultaneously or at different times.

Various features are described herein as being present in "some embodiments". Such features are not mandatory and may not be present in all embodiments. Embodiments of the invention may include zero, any one or any combination of two or more of such features. All possible combinations of such features are contemplated by this disclosure even where such features are shown in different drawings and/or described in different sections or paragraphs. This is limited only to the extent that certain ones of such features are incompatible with other ones of such features in the sense that it would be impossible for a person of ordinary skill in the art to construct a practical embodiment that combines such incompatible features. Consequently, the description that "some embodiments" possess feature A and "some embodiments" possess feature B should be interpreted as an express indication that the inventors also contemplate embodiments which combine features A and B (unless the description states otherwise or features A and B are fundamentally incompatible).This is the case even if features A and B are illustrated in different drawings and/or mentioned in different paragraphs, sections or sentences.

## Claims

1. Apparatus (100) for mixing a fluid mixture suitable for creating microbubbles, the apparatus (100) comprising:
an elongated housing (102) extending in a longitudinal direction (101) from a fluid inlet end (103) to a fluid outlet end (105), the housing (102) comprising a lower surface (102B) that extends generally in the longitudinal direction (101) and an upper surface (102A) that extends at an ascending angle relative to the longitudinal direction (101), wherein the elongated housing (102) tapers from the fluid outlet end (105) towards the fluid inlet end (103) along the longitudinal direction (101) such that a cross-sectional area of an interior (107) of the housing (102) decreases along the longitudinal direction (101) between the fluid outlet end (105) and the fluid inlet end (103); and,
one or more baffle plates (104,106) located within the interior (107) of the housing (102), each of the one or more baffle plates (104,106) shaped to disrupt a flow of fluid from the fluid inlet end (103) to the fluid outlet end (105) to separate bubbles from the flow of fluid by rising upwardly to follow an upper fluid path (121) along the upper surface (102A) of the housing (102) from the fluid inlet end (103) to the fluid outlet end (105),
wherein an interior surface of the housing (102) and each of the one or more baffle plates (104,106) are shaped to define a lower aperture (109,111) located at a bottom of the interior (107) of the housing (102) and at a cross-sectional location corresponding to the baffle plate (104,106),
wherein the interior surface of the housing (102) and each of the one or more baffle plates (104,106) are shaped to define an upper aperture (114,116) located at a top of the interior (107) of the housing (102) and at a cross-sectional location corresponding to the baffle plate (104,106) to facilitate said upper flow,
wherein the one or more baffle plates (104,106) comprise a plurality of baffle plates (104,106), wherein at least two of the plurality of baffle plates (104,106) are shaped to define their respective lower apertures (109,111) at opposing transverse sides of the housing (102),
wherein the housing (102) is shaped to define an upper fluid outlet (117) at the fluid outlet end (105) for directing the large air bubbles (127) out of the housing (102),
wherein the upper fluid path (121) extends along the upper surface (102A) of the housing (102) and through the upper apertures (114, 116) from the fluid inlet end (103) to the upper fluid outlet (117) at the fluid outlet end (105),
wherein the housing (102) is shaped to define a fluid inlet (113) at the fluid inlet end (103) and a lower fluid outlet (115) at the fluid outlet end (105) for facilitating a lower flow of fluid (125) out of the housing (102).

2. The apparatus according to claim 1 wherein each of the lower apertures (109,111) located at the bottom of the interior (107) is defined by the respective baffle plate (104,106), the lower surface (102B) and a side surface (102C,102D) of the housing (102) to facilitate the lower flow of fluid (125) along a lower flow path (120) along the bottom of the interior (107) of the housing (102) and through the lower aperture(s) (109,111) from the fluid inlet end (103) to the fluid outlet end (105).

3. The apparatus according to claim 1 or 2, wherein the longitudinal direction (101) is horizontal.

4. The apparatus according to any one of claims 1 to 3 wherein the fluid inlet (113) is defined in the upper surface (102A) of the housing (102).

5. The apparatus according to any one of claims 1 to 4 wherein each of the one or more baffle plates (104,106) comprises a planar body extending in cross-sectional directions that are generally orthogonal to the longitudinal direction (101).

6. The apparatus according to any one of claims 1 to 5 wherein the housing (102) is shaped to define a third fluid outlet (119) in the upper surface (102A) of the housing (102) and at a location between the fluid inlet (113) and the lower fluid outlet (115) for directing fluid out of the housing (102).

7. The apparatus according to any one of claims 1 to 6 wherein the upper fluid outlet (117) is coupled to an air vent valve (124) for directing the large air bubbles (127) out of the housing (102).

8. Method for separating large air bubbles from a flow of fluid, the method comprising the steps of:
directing the flow of fluid into an apparatus according to any one of claims 1 to 7;
disrupting the flow of fluid inside a housing (102) of the apparatus with one or more baffle plates (104,106) to create turbulence in the flow of fluid wherein the turbulence causes large air bubbles (127) to form and separate from the flow of fluid;
directing large air bubbles (127) formed from the turbulence to an upper fluid path (121) along an upper surface (102A) of the apparatus and to an exterior of the apparatus; and
directing a remaining flow of fluid through a lower fluid path (120), the lower fluid path (120) lower than the upper fluid path (121) and defined by a plurality of apertures (109,111) within the housing (102), wherein at least two of the plurality of apertures (109,111) are located on opposing transverse sides of the housing 102.

9. The method according to claim 8 wherein disrupting the flow of fluid comprises sequentially disrupting the flow of fluid in the at least three chambers (107A-C) such that the flow of fluid is less turbulent in a subsequent chamber than in a preceding chamber.

10. The method according to claim 8 or 9 comprising separating, in one or more subsequent chambers (107B,170C), large air bubbles (127) that were not separated from the flow of fluid in a preceding chamber (107A).

11. The method according to any one of claims 8 to 10 comprising directing the remaining flow of fluid from the lower fluid path (120) to one or more microbubble generating nozzles.

## Patentansprüche

1. Vorrichtung (100) zum Mischen eines Flüssigkeitsgemisches, das sich zum Schaffen von Mikrobläschen eignet, wobei die Vorrichtung (100) umfasst:
ein längliches Gehäuse (102), das sich in einer Längsrichtung (101) von einem Flüssigkeits-Einlassende (103) zu einem Flüssigkeits-Auslassende (105) erstreckt, wobei das Gehäuse (102) eine untere Oberfläche (102B), die sich im Allgemeinen in der Längsrichtung (101) erstreckt, und eine obere Oberfläche (102A) umfasst, die sich in einem ansteigenden Winkel in Bezug zur Längsrichtung (101) erstreckt, wobei sich das längliche Gehäuse (102) vom Flüssigkeits-Auslassende (105) in Richtung des Flüssigkeits-Einlassendes (103) entlang der Längsrichtung (101) verjüngt, sodass eine Querschnittsfläche eines Inneren (107) des Gehäuses (102) entlang der Längsrichtung (101) zwischen dem Flüssigkeits-Auslassende (105) und dem Flüssigkeits-Einlassende (103) abnimmt; und,
ein oder mehrere Leitbleche (104,106), die sich im Inneren (107) des Gehäuses (102) befinden, wobei jedes von dem einen oder mehreren Leitblechen (104,106) geformt ist, um einen Flüssigkeitsstrom vom Flüssigkeits-Einlassende (103) zum Flüssigkeits-Auslassende (105) zu unterbrechen, um Bläschen aus dem Flüssigkeitsstrom abzuscheiden, indem sie nach oben ansteigen, um einem oberen Flüssigkeitsweg (121) entlang der oberen Oberfläche (102A) des Gehäuses (102) vom Flüssigkeits-Einlassende (103) zum Flüssigkeits-Auslassende (105) zu folgen,
wobei eine Innenoberfläche des Gehäuses (102) und jedes von dem einen oder mehreren Leitblechen (104,106) geformt sind, um eine untere Öffnung (109,111) zu definieren, die sich auf einem Boden des Inneren (107) des Gehäuses (102) und an einer Querschnittstelle, die dem Leitblech (104,106) entspricht, befindet,
wobei die Innenoberfläche des Gehäuses (102) und jedes von dem einen oder mehreren Leitblechen (104,106) geformt sind, um eine obere Öffnung (114,116) zu definieren, die sich auf einer Oberseite des Inneren (107) des Gehäuses (102) und an einer Querschnittstelle, die dem Leitblech (104,106) entspricht, befindet, um die obere Strömung zu erleichtern,
wobei das eine oder mehrere Leitbleche (104,106) eine Vielzahl von Leitblechen (104,106) umfassen, wobei mindestens zwei der Vielzahl von Leitblechen (104,106) geformt sind, um ihre jeweiligen unteren Öffnungen (109,111) an gegenüberliegenden Querseiten des Gehäuses (102) zu definieren,
wobei das Gehäuse (102) geformt ist, um einen oberen Flüssigkeitsauslass (117) am Flüssigkeits-Auslassende (105) zum Leiten der großen Luftbläschen (127) aus dem Gehäuse (102) heraus zu definieren,
wobei sich der obere Flüssigkeitsweg (121) entlang der oberen Oberfläche (102A) des Gehäuses (102) und durch die oberen Öffnungen (114, 116) hindurch vom Flüssigkeits-Einlassende (103) zum oberen Flüssigkeitsauslass (117) am Flüssigkeits-Auslassende (105) erstreckt,
wobei das Gehäuse (102) geformt ist, um einen Flüssigkeitseinlass (113) am Flüssigkeits-Einlassende (103) und einen unteren Flüssigkeitsauslass (115) am Flüssigkeits-Auslassende (105) zum Erleichtern eines unteren Flüssigkeitsstroms (125) aus dem Gehäuse (102) heraus zu definieren.

2. Vorrichtung nach Anspruch 1, wobei jede von den unteren Öffnungen (109,111), die sich am Boden des Inneren (107) befinden, durch das jeweilige Leitblech (104,106), die untere Oberfläche (102B) und eine Seitenoberfläche (102C, 102D) des Gehäuses (102) definiert ist, um den unteren Flüssigkeitsstrom (125) entlang eines unteren Strömungswegs (120) entlang des Bodens des Inneren (107) des Gehäuses (102) und durch die untere(n) Öffnung(en) (109,111) vom Flüssigkeits-Einlassende (103) zum Flüssigkeits-Auslassende (105) zu erleichtern.

3. Vorrichtung nach Anspruch 1 oder 2, wobei die Längsrichtung (101) horizontal ist.

4. Vorrichtung nach einem der Ansprüche 1 bis 3, wobei der Flüssigkeitseinlass (113) in der oberen Oberfläche (102A) des Gehäuses (102) definiert ist.

5. Vorrichtung nach einem der Ansprüche 1 bis 4, wobei jedes von dem einen oder mehreren Leitblechen (104,106) einen planaren Körper umfasst, der sich in Querschnittsrichtungen erstreckt, die im Allgemeinen orthogonal zur Längsrichtung (101) verlaufen.

6. Vorrichtung nach einem der Ansprüche 1 bis 5, wobei das Gehäuse (102) geformt ist, um einen dritten Flüssigkeitsauslass (119) in der oberen Oberfläche (102A) des Gehäuses (102) und an einer Stelle zwischen dem Flüssigkeitseinlass (113) und dem unteren Flüssigkeitsauslass (115) zum Leiten von Flüssigkeit aus dem Gehäuse (102) heraus zu definieren.

7. Vorrichtung nach einem der Ansprüche 1 bis 6, wobei der obere Flüssigkeitsauslass (117) mit einem Entlüftungsventil (124) zum Leiten der großen Luftbläschen (127) aus dem Gehäuse (102) heraus gekoppelt ist.

8. Verfahren zum Abscheiden großer Luftbläschen aus einem Flüssigkeitsstrom, wobei das Verfahren die folgenden Schritte umfasst:
Leiten des Flüssigkeitsstroms in eine Vorrichtung nach einem der Ansprüche 1 bis 7;
Unterbrechen des Flüssigkeitsstroms in einem Gehäuse (102) der Vorrichtung mit einem oder mehreren Leitblechen (104,106), um eine Verwirbelung im Flüssigkeitsstrom zu schaffen, wobei die Verwirbelung große Luftbläschen (127) veranlasst, sich zu bilden, und vom Flüssigkeitsstrom abzuscheiden;
Leiten großer Luftbläschen (127), die sich aus der Verwirbelung bilden, in einen oberen Flüssigkeitsweg (121) entlang einer oberen Oberfläche (102A) der Vorrichtung und zu einem Äußeren der Vorrichtung; und
Leiten des verbleibenden Flüssigkeitsstroms durch einen unteren Flüssigkeitsweg (120) hindurch, wobei der untere Flüssigkeitsweg (120) tiefer als der obere Flüssigkeitsweg (121) liegt und durch eine Vielzahl von Öffnungen (109,111) innerhalb des Gehäuses (102) definiert ist, wobei sich mindestens zwei der Vielzahl von Öffnungen (109,111) an gegenüberliegenden Querseiten des Gehäuses 102 befinden.

9. Verfahren nach Anspruch 8, wobei Unterbrechen des Flüssigkeitsstroms das nacheinander Unterbrechen des Flüssigkeitsstroms in den mindestens drei Kammern (107A-C) umfasst, sodass der Flüssigkeitsstrom in einer nachfolgenden Kammer weniger verwirbelt ist, als in einer vorherigen Kammer.

10. Verfahren nach Anspruch 8 oder 9, umfassend Abscheiden in einer oder mehreren nachfolgenden Kammern (107B,170C) großer Luftbläschen (127), die in einer vorherigen Kammer (107A) nicht vom Flüssigkeitsstrom abgeschieden worden sind.

11. Verfahren nach einem der Ansprüche 8 bis 10, umfassend Leiten des verbleibenden Flüssigkeitsstroms vom unteren Flüssigkeitsweg (120) zu einer oder mehreren Mikrobläschen erzeugenden Düsen.

## Revendications

1. Appareil (100) destiné à mélanger un mélange de fluides adéquat pour créer des microbulles, l'appareil (100) comprenant :
un boîtier (102) allongé s'étendant dans une direction longitudinale (101) depuis une extrémité d'entrée de fluide (103) jusqu'à une extrémité de sortie de fluide (105), le boîtier (102) comprenant une surface inférieure (102B) qui s'étend globalement dans la direction longitudinale (101) et une surface supérieure (102A) qui s'étend selon un angle ascendant par rapport à la direction longitudinale (101), dans lequel le boîtier (102) allongé se rétrécit depuis l'extrémité de sortie de fluide (105) vers l'extrémité d'entrée de fluide (103) le long de la direction longitudinale (101) de telle sorte qu'une section transversale d'un intérieur (107) du boîtier (102) diminue le long de la direction longitudinale (101) entre l'extrémité de sortie de fluide (105) et l'extrémité d'entrée de fluide (103) ; et,
une ou plusieurs plaques déflectrices (104, 106) situées à l'intérieur (107) du boîtier (102), chacune des une ou plusieurs plaques déflectrices (104, 106) étant conçue pour perturber un écoulement de fluide depuis l'extrémité d'entrée de fluide (103) jusqu'à l'extrémité de sortie de fluide (105) pour séparer des bulles de l'écoulement de fluide en remontant vers le haut pour suivre un chemin de fluide supérieur (121) le long de la surface supérieure (102A) du boîtier (102) depuis l'extrémité d'entrée de fluide (103) jusqu'à l'extrémité de sortie de fluide (105), dans lequel une surface intérieure du boîtier (102) et chacune des une ou plusieurs plaques déflectrices (104, 106) sont conçues pour définir une ouverture inférieure (109, 111) située au niveau d'un fond de l'intérieur (107) du boîtier (102) et au niveau d'un emplacement transversal correspondant à la plaque déflectrice (104, 106),
dans lequel la surface intérieure du boîtier (102) et chacune des une ou plusieurs plaques déflectrices (104, 106) sont conçues pour définir une ouverture supérieure (114, 116) située au niveau d'une partie supérieure de l'intérieur (107) du boîtier (102) et au niveau d'un emplacement transversal correspondant à la plaque déflectrice (104, 106) pour faciliter ledit écoulement supérieur,
dans lequel les une ou plusieurs plaques déflectrices (104, 106) comprennent une pluralité de plaques déflectrices (104, 106), dans lequel au moins deux de la pluralité de plaques déflectrices (104, 106) sont conçues pour définir leurs ouvertures inférieures respectives (109, 111) au niveau de côtés transversaux opposés du boîtier (102),
dans lequel le boîtier (102) est conçu pour définir une sortie de fluide supérieure (117) au niveau de l'extrémité de sortie de fluide (105) destinée à diriger les grosses bulles d'air (127) hors du boîtier (102),
dans lequel
le chemin de fluide supérieur (121) s'étend le long de la surface supérieure (102A) du boîtier (102) et à travers les ouvertures supérieures (114, 116) depuis l'extrémité d'entrée de fluide (103) jusqu'à la sortie de fluide supérieure (117) au niveau de l'extrémité de sortie de fluide (105), dans lequel le boîtier (102) est conçu pour définir une entrée de fluide (113) au niveau de l'extrémité d'entrée de fluide (103) et une sortie de fluide inférieure (115) au niveau de l'extrémité de sortie de fluide (105) pour faciliter un écoulement inférieur de fluide (125) hors du boîtier (102).

2. Appareil selon la revendication 1 dans lequel chacune des ouvertures inférieures (109, 111) situées au niveau du fond de l'intérieur (107) est définie par la plaque déflectrice respective (104, 106), la surface inférieure (102B) et une surface latérale (102C, 102D) du boîtier (102) pour faciliter l'écoulement inférieur de fluide (125) le long d'un chemin d'écoulement inférieur (120) le long du fond de l'intérieur (107) du boîtier (102) et à travers la ou les ouvertures inférieures (109, 111) depuis l'extrémité d'entrée de fluide (103) jusqu'à l'extrémité de sortie de fluide (105).

3. Appareil selon la revendication 1 ou 2, dans lequel la direction longitudinale (101) est horizontale.

4. Appareil selon l'une quelconque des revendications 1 à 3, dans lequel l'entrée de fluide (113) est définie dans la surface supérieure (102A) du boîtier (102).

5. Appareil selon l'une quelconque des revendications 1 à 4, dans lequel chacune des une ou plusieurs plaques déflectrices (104, 106) comprend un corps planaire s'étendant dans des directions en coupe transversale qui sont globalement orthogonales à la direction longitudinale (101).

6. Appareil selon l'une quelconque des revendications 1 à 5, dans lequel le boîtier (102) est conçu pour définir une troisième sortie de fluide (119) dans la surface supérieure (102A) du boîtier (102) et au niveau d'un emplacement entre l'entrée de fluide (113) et la sortie de fluide inférieure (115) pour diriger un fluide hors du boîtier (102).

7. Appareil selon l'une quelconque des revendications 1 à 6, dans lequel la sortie de fluide supérieure (117) est couplée à une vanne de purge d'air (124) pour diriger les grosses bulles d'air (127) hors du boîtier (102).

8. Procédé destiné à séparer de grosses bulles d'air d'un écoulement de fluide, le procédé comprenant les étapes consistant à :
diriger l'écoulement de fluide dans un appareil selon l'une quelconque des revendications 1 à 7 ;
perturber l'écoulement de fluide dans un boîtier (102) de l'appareil avec une ou plusieurs plaques déflectrices (104, 106) pour créer une turbulence dans l'écoulement de fluide dans lequel la turbulence amène de grosses bulles d'air (127) à se former et se séparer de l'écoulement de fluide ;
diriger de grosses bulles d'air (127) formées depuis la turbulence vers un chemin de fluide supérieur (121) le long d'une surface supérieure (102A) de l'appareil et vers un extérieur de l'appareil ; et
diriger un écoulement restant de fluide à travers un chemin de fluide inférieur (120), le chemin de fluide inférieur (120) étant plus petit que le chemin de fluide supérieur (121) et défini par une pluralité d'ouvertures (109, 111) dans le boîtier (102), dans lequel au moins deux de la pluralité d'ouvertures (109, 111) sont situées sur des côtés transversaux opposés du boîtier 102.

9. Procédé selon la revendication 8, dans lequel la perturbation de l'écoulement de fluide comprend la perturbation séquentielle de l'écoulement de fluide dans les au moins trois chambes (107A-C) de telle sorte que l'écoulement de fluide est moins turbulent dans une chambre suivante que dans une chambre précédente.

10. Procédé selon la revendication 8 ou 9 comprenant la séparation, dans une ou plusieurs chambres suivantes (107B, 170C), de grosses bulles d'air (127) qui n'ont pas été séparées de l'écoulement de fluide dans une chambre précédente (107A).

11. Procédé selon l'une quelconque des revendications 8 à 10 comprenant le fait de diriger l'écoulement restant de fluide depuis le chemin de fluide inférieur (120) jusqu'à une ou plusieurs buses génératrices de microbulles.
